# FASCICULE DE BREVET EUROPEEN

(11) **EP 4 348 276 B1**
(45) Date de publication et mention de la délivrance du brevet: **24.12.2025**
(21) Numéro de dépôt: 22729706.6
(22) Date de dépôt: 20.05.2022
(51) Int. Cl.: G01P 5/06, G01P 13/02

(54) **SONDE DE MESURE AERODYNAMIQUE**
AERODYNAMISCHE MESSSONDE
AERODYNAMIC MEASUREMENT PROBE

(30) Priorité: 27.05.2021 FR 2105489
(43) Date de publication de la demande: 10.04.2024
(73) Titulaire: THALES, 92190 Meudon (FR)
(72) Inventeur: SZULGA, Natacha, 86101 CHATELLERAULT (FR); PEREZ, François, 86101 CHATELLERAULT (FR); LOIL, Eric, 86101 CHATELLERAULT (FR); SARDIN, Frédéric, 41102 VENDÔME CEDEX (FR); BE, Jocelyn, 41102 VENDÔME CEDEX (FR); VALLEE, Jean-Luc, 86101 CHATELLERAULT (FR); GUILLABEAU, Tristan, 86101 CHATELLERAULT (FR)
(74) Mandataire: Atout PI Laplace
(86) Numéro de dépôt international: PCT/EP2022/063759
(87) Numéro de publication internationale: WO 2022/248360

(56) Documents cités:
- US-A1- 2004 188 945
- US-A1- 2015 082 878
- US-A1- 2016 033 356

## Description

L'invention porte sur une sonde de mesure aérodynamique destinée à mesurer une incidence locale de flux d'air circulant le long du fuselage d'un aéronef, notamment une sonde d'incidence (AOA) ou de dérapage (SSA).

Selon une technique connue, les sondes de mesure aérodynamique destinées à mesurer une incidence (AOA) ou un dérapage (SSA) comprennent un ensemble mobile en rotation destinée à s'orienter dans l'axe du flux d'air entourant l'aéronef sur lequel le support fixe ou solidaire du fuselage est installé. La mesure de l'incidence locale d'un flux d'air contre le fuselage d'un aéronef est un paramètre essentiel à son pilotage. Elle permet de définir la direction du vecteur vitesse de l'aéronef par rapport à l'écoulement d'air ambiant qui l'entoure.

L'utilisation d'un ensemble mobile pose le problème de l'étanchéité de l'ensemble mobile par rapport à son support encastré dans le fuselage de l'aéronef. Il est nécessaire de prévoir des moyens pour empêcher ou limiter les infiltrations de liquide ou d'autre corps étranger dans le mécanisme de la sonde.

Diverses solutions de roulements étanches, à frottements secs ou à frottements visqueux, ont été envisagées pour résoudre cette difficulté. Ces solutions présentent des performances variables en étanchéité et peuvent être dimensionnées en fonction des besoins de l'aéronef.

Des impuretés peuvent atteindre ces roulements et les gripper ou les bloquer. Pour empêcher cela, il est possible de rendre l'interstice étanche avec une protection déformable, au détriment de la précision/sensibilité de mesure, ou de permettre l'intrusion de corps étrangers et de gérer leur évacuation.

Les frottements secs ou visqueux entre l'axe et le support génèrent toutefois un couple qui s'oppose à la rotation de l'ensemble mobile. Pour répondre aux exigences les plus élevées en termes de précision et de temps de réponse des sondes aérodynamiques, il est envisagé la mise en œuvre d'axes tournants sans frottement par rapport au support. Pour permettre une rotation libre de l'axe, l'axe tournant est relié au support par un ensemble de paliers de guidage en rotation, sans joints ou autres moyens d'étanchéité en contact avec l'axe. On admet donc que des impuretés, comme des gouttes d'eau, des particules de glace, des grains de sable, des poussières, des particules de suies, ... puissent s'infiltrer à l'interface entre l'axe et le support.

Pour ces dispositifs à axe tournant sans frottement, on cherche néanmoins à limiter la quantité d'impuretés d'infiltration.

Les aéronefs sont soumis à des environnements sévères dans lesquels des particules de suie, de poussière, de givre et/ou des gouttelettes d'eau sont portés par l'écoulement fluide. Les sondes doivent être robustes à ces environnements. Les tests de qualification DO160 présentent par exemple des conditions de test sévères (sable et poussière, ingestion d'eau, givrage) auxquelles les sondes doivent répondre afin de démontrer leur robustesse en conditions opérationnelles.

Il est connu la sonde AOA C16291AB, développée par Thales, possède un jeu fonctionnel très large entre la plaque avion et la partie rotative. Ce jeu fonctionnel communique avec un vide situé sous la plaque avion. Le trou de purge est systématiquement dirigé vers le bas. La taille importante du jeu fonctionnel permet d'éviter le blocage de la partie tournante par une accumulation de particules de petite taille (ou par les plus grosses particules des essais sable de type DO160). Le grand volume vide en dessous de la plaque avion permet de "stocker" les particules sans risquer de bloquer la partie tournante si les vitesses d'évacuation du trou de purge venaient à être insuffisantes.

La gestion des particules ingérées par cette sonde repose sur le jeu fonctionnel entre la partie mobile et la partie fixe. Ce jeu, grand devant la dimension des particules usuellement rencontrées, permet d'éviter le blocage de la girouette par des particules solides. Par contre, ce grand jeu fonctionnel favorise des échanges thermiques intenses avec l'air au niveau de la base de la girouette. Ceci rend cette première solution vulnérable au givrage.

Il est connu le document US 2016/033356 A1 qui divulgue une sonde d'incidence destinée à un aéronef, comprenant une girouette rotative placée dans un support, avec un jeu fonctionnel permettant à la sonde de tourner autour de son axe. L'interstice entre le support et l'arbre de la girouette comprend une surface arrondie, convexe, formant un canal étroit dans une région localisée.

Il est également connu le document US10393766 B2 qui divulgue un système de gestion de l'eau entrant dans une sonde de mesure angulaire. Une solution à quatre trous de purge est présentée, dont deux sont toujours dirigés vers le bas. Le jeu fonctionnel de la sonde est relié à tous les trous de purge par un important volume sous la partie fixe de la sonde. De la même manière, ce grand volume permet de stocker de l'eau si les vitesses de sorties des trous de purge venaient à être insuffisantes. Il est à noter que ce système de gestion de l'eau ingérée par la sonde permet, dans certains cas, l'accès de l'eau au boitier électronique de la sonde.

Une telle sonde est une réponse au problème de la gestion d'eau entrant par les trous de purge. Elle ne répond pas à la problématique d'intrusion de particules solides à l'intérieur de la sonde ni aux problématiques de givrage.

Il est aussi connu le document EP 2851689 qui divulgue une solution permettant de guider l'eau ingérée par une sonde de mesure d'angle par son jeu fonctionnel jusqu'aux trous de purge qui permettent de l'évacuer. La solution proposée repose sur la forme de la base de l'élément tournant et de la partie fixe. L'interstice entre ces deux parties forme alors plusieurs canaux qui guident l'eau ingérée préférentiellement vers les trous de purge plutôt que vers les roulements qui mettent la partie mobile en rotation.

Une telle sonde présente une forme qui ne peut être réalisée qu'en impression 3D car elle apparaît impossible à réaliser par des techniques d'usinage classiques: Une telle sonde présente une forme qui ne peut être réalisée qu'en impression 3D car elle apparaît très difficile à réaliser par des techniques d'usinage classiques, et sinon à un coût trop élevé. Or, cette technique de fabrication n'est pas encore certifiée pour l'aéronautique. En outre, les canaux de dimensions faibles peuvent être vulnérables à l'ingestion de sable, et entraîner un risque de blocage.

Un but de l'invention est de proposer une sonde qui pallie les inconvénients précédemment cités et particulièrement les problèmes de givrage et d'évacuation des impuretés.

Il est proposé, selon un aspect de l'invention, une sonde de mesure aérodynamique destinée à mesurer une incidence locale de flux d'air circulant le long du fuselage d'un aéronef, comprenant un support et un arbre mobile en rotation selon un axe longitudinal, par rapport au support, le support et l'arbre étant configurés pour former entre eux un interstice, contournant une languette annulaire en l'extrémité de l'arbre dans le support, permettant de maintenir un jeu fonctionnel pour laisser pivoter librement une extrémité de l'arbre dans le support, et communiquant avec un circuit d'évacuation d'impuretés, l'interstice comprenant une gorge annulaire interne autour de l'axe de rotation, réalisée dans le support, et s'ouvrant en s'écartant de l'axe directement sur la partie extrêmale de la languette annulaire, le profil de la gorge interne étant arrondi.

On entend par impuretés des gouttes d'eau, des particules de glace, des grains de sable, des poussières, des particules de suies...

Une telle sonde munie d'une telle gorge annulaire interne favorise le développement d'un tourbillon sans favoriser de stocker du sable directement sous le pied de l'arbre mobile ou girouette (proximité de l'axe de rotation). Elle permet de protéger plus particulièrement les roulements permettant la rotation de l'arbre.

En outre, la présence d'une telle languette permet d'éviter que l'écoulement puisse entrer par les trous de purge au lieu d'en sortir.

Un profil arrondi favorise le développement d'un tourbillon sans favoriser de stocker du sable directement sous le pied de l'arbre.

Selon un mode de réalisation, l'interstice comprend, en outre, une gorge annulaire externe, autour de l'axe de rotation, réalisée dans le support, et s'ouvrant en se rapprochant de l'axe, de sorte que la languette annulaire est disposée directement entre les gorges interne et externe.

Cette gorge externe permet la création d'un tourbillon proche de l'entrée de l'interstice, et conduit les impuretés vers les trous de purge.

Selon un mode de réalisation, le profil de la gorge externe est rectangulaire.

Un profil rectangulaire permet de maximiser la place pour stocker du sable entre deux nettoyages successifs.

Dans un mode de réalisation, le profil rectangulaire de la gorge externe est de hauteur comprise entre 1,5 mm et 4 mm, et préférentiellement de hauteur 3 mm.

Ces dimensions permettent un excellent compromis entre la bonne tenue au givre (on limite la convection et on laisse la place pour un éventuel réchauffeur) et la possibilité de stocker du sable entre deux nettoyages successifs. Ces dimensions permettent aussi le développement du tourbillon favorable à l'évacuation des impuretés.

Selon un mode de réalisation, le profil rectangulaire de la gorge externe est de profondeur comprise entre 3 mm et 7 mm, et préférentiellement de profondeur de 4,5 mm.

Ces dimensions permettent également un excellent compromis é entre la bonne tenue au givre (on limite la convection et on laisse la place pour un éventuel réchauffeur) et la possibilité de stocker du sable entre deux nettoyages successifs. Ces dimensions permettent aussi le développement du tourbillon favorable à l'évacuation des impuretés.

Selon un mode de réalisation, le profil arrondi de la gorge interne est de diamètre compris entre 2 et 5 mm, et préférentiellement de diamètre de 3,2 mm.

Ces dimensions permettent un excellent compromis entre l'espace entre le support fixe de la sonde et la base de l'arbre mobile, l'effet barrière aux impuretés et le jeu fonctionnel qui doit être assez important pour les performances en précision.

Dans un mode de réalisation, l'interstice comprend une première partie sensiblement rectiligne, de largeur comprise entre 1 mm et 5mm, et préférentiellement de largeur 1,2 mm, entre la partie débouchant à l'air libre de l'interstice et la gorge externe.

Cela permet d'éviter l'aspiration d'air par les trous de purge du circuit d'évacuation d'impuretés et de laisser passer les plus grosses impuretés de type sable (selon réglementation DO 160).

Selon un mode de réalisation, l'interstice comprend une deuxième partie sensiblement rectiligne, entre la gorge externe et la gorge interne, de largeur comprise entre 0,5 mm et 1 mm, et préférentiellement de largeur 0,65 mm.

Ces dimensions permettent de garantir la précision de la mesure.

Dans un mode de réalisation, l'interstice comprend une troisième partie sensiblement rectiligne, disposée entre la gorge interne et une quatrième partie de l'interstice au contact d'éléments mécaniques de l'arbre mobile permettant sa rotation, de largeur comprise entre 0,5 mm et 1 mm, et préférentiellement de largeur 0,65 mm.

Ces dimensions permettent un excellent compromis entre l'espace entre le support fixe de la sonde et la base de l'arbre mobile, l'effet barrière aux impuretés et le jeu fonctionnel qui doit être assez important pour les performances en précision.

L'invention sera mieux comprise à l'étude de quelques modes de réalisation décrits à titre d'exemples nullement limitatifs et illustrés par le dessin annexé sur lequel :
[Fig.1] illustre schématiquement une vue extérieure de la sonde de mesure aérodynamique, selon un aspect de l'invention ;
[Fig.2] illustre schématiquement une vue de coupe de la sonde de mesure aérodynamique ne passant pas par les trous de purge du circuit d'évacuation d'impuretés, selon un aspect de l'invention ;
[Fig.3] illustre schématiquement une vue de coupe de la sonde de mesure aérodynamique passant par les trous de purge du circuit d'évacuation d'impuretés, selon un aspect de l'invention ;
[Fig.4] illustre schématiquement une vue de coupe de la sonde de mesure aérodynamique au niveau de l'interstice entre le support et l'arbre en rotation avec champs de vitesse projetés dans le plan de coupe, selon un aspect de l'invention ;
[Fig.5a] illustre schématiquement une vue externe des lignes de courant de l'écoulement d'air sortant des trous de purge du circuit d'évacuation d'impuretés, selon un aspect de l'invention ;
[Fig.5b] illustre schématiquement une vue externe des lignes de courant de l'écoulement d'air sortant de la partie arrière de l'interstice, selon un aspect de l'invention ;
[Fig.6a] illustre schématiquement une vue interne des lignes de courant de l'écoulement d'air sortant des trous de purge du circuit d'évacuation d'impuretés, selon un aspect de l'invention ; et
[Fig.6b] illustre schématiquement une vue interne des lignes de courant de l'écoulement d'air sortant de la partie arrière de l'interstice, selon un aspect de l'invention.

Sur l'ensemble des figures, les éléments ayant des références identiques sont similaires.

Dans la présente description, les modes de réalisation décrits ne sont pas limitatifs, et les caractéristiques et fonctions bien connues de l'homme du métier ne sont pas décrites en détails.

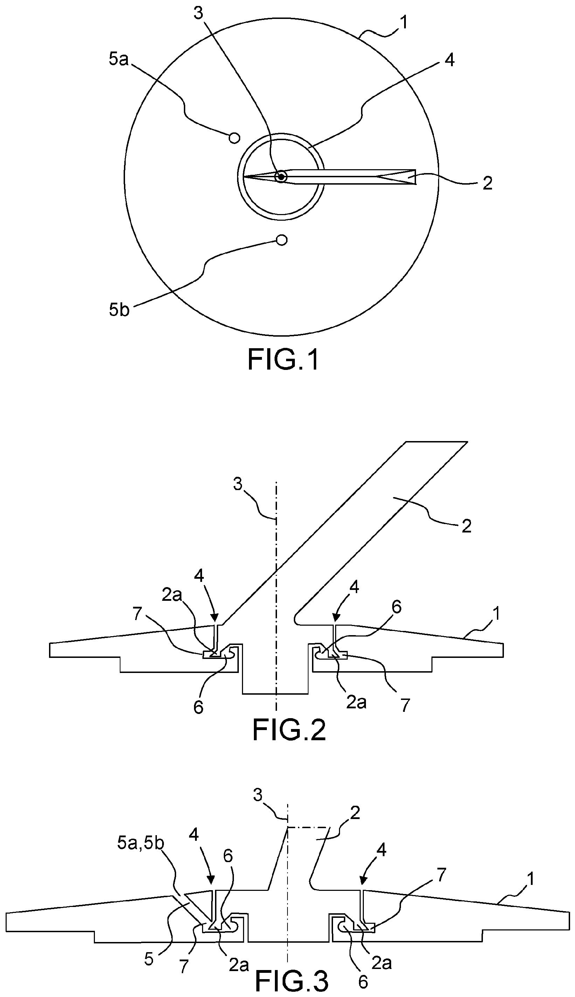

Sur la figure 1 est représentée schématiquement une sonde de mesure aérodynamique destinée à mesurer une incidence locale de flux d'air circulant le long du fuselage d'un aéronef, comprenant un support 1, en l'espèce de forme circulaire, et un arbre mobile 2 en rotation selon un axe longitudinal 3, par rapport au support 1.

La solution proposée pour gérer l'ingestion d'impuretés par une sonde de mesure aérodynamique repose sur la conception ou design du jeu fonctionnel entre l'arbre mobile ou girouette 2 et le corps réchauffeur et des trous de purge. Le design proposé permet à la fois de gérer l'ingestion de cristaux de glace, de gouttelettes d'eau et de particules solides de type cendres volcaniques, poussières ou grains de sable, ... (définis par le document DO 160 qui définit des procédures de tests pour des équipements embarqués dans un aéronef).

La figure 1 montre l'extérieur d'une sonde de mesure aérodynamique et met en évidence l'interstice 4 entre le support 1 et l'arbre mobile 2, qui contourne une languette annulaire 2a en l'extrémité de l'arbre 2 dans le support 1. Lorsque la sonde est placée dans un écoulement d'air, l'air entre par la partie avant de l'interstice 4 et ressort par les trous de purge d'un circuit d'évacuation d'impuretés 5, en l'espèce deux trous de purge 5a et 5b ainsi que par la partie arrière de l'interstice 4.

Par exemple, Les trous de purge 5a et 5b sont disposés de telle sorte que l'un des deux puisse toujours être situé vers le bas (sens de la gravité) que la sonde soit montée à droite ou à gauche de l'aéronef. La figure 1 montre le cas où le trou de purge 5b est situé vers le bas. Ceci permet d'évacuer par gravité les impuretés qui entreraient dans la sonde lorsque l'aéronef est à l'arrêt ou en phase de roulage.

La figure 2 représente une vue de coupe de la sonde de mesure aérodynamique, qui ne passe pas par les trous de purge 5a, 5b du circuit d'évacuation d'impuretés, et la figure 3 représente une vue de coupe de la sonde de mesure aérodynamique, qui ne passe pas par les trous de purge 5a, 5b du circuit d'évacuation d'impuretés, selon un aspect de l'invention. Ces coupes passent par le plan de symétrie de l'arbre mobile ou girouette 2.

L'interstice 4 comprend une gorge annulaire interne 6 autour de l'axe de rotation, réalisée dans le support 1, et s'ouvrant en s'écartant de l'axe.

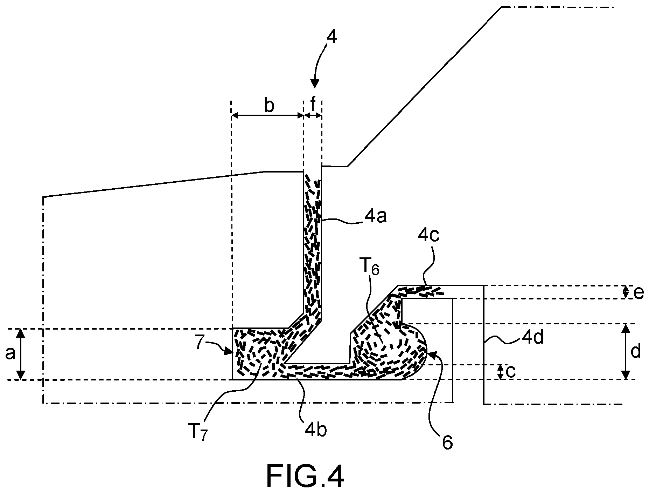

La figure 4 détaille plus à même l'interstice 4.

Comme illustré sur les figures 2, 3 et 4, le départ de l'interstice 4 entre le pied de l'arbre rotatif 2 et le support fixe 1 est sensiblement rectiligne, de largeur constante permettant d'éviter l'aspiration d'air par les trous de purge.

De manière optionnelle, l'interstice 4 peut comprendre en outre, une gorge annulaire externe 7, autour de l'axe de rotation 3, réalisée dans le support, et s'ouvrant en se rapprochant de l'axe. De manière non limitative, les figures décrites dans la présente description comprennent une telle gorge annulaire externe 7.

En outre, l'extrémité de l'arbre 2 dans le support peut comprendre une languette annulaire 2a disposée entre les gorges interne 6 et externe 7.

L'ingestion de sable aéroporté par l'interstice 1 ne doit pas bloquer la rotation de l'arbre mobile 2. Il doit donc laisser passer les plus grands grains de sable. La norme DO 160 indique une taille maximale de grain de l'ordre de 1 mm. Ainsi, la largeur minimale de l'interstice 4 doit être légèrement au-dessus de 1 mm. D'autre part, pour des raisons de protection thermique, la largeur de l'interstice 4 doit être la plus réduite possible. Une valeur maximale acceptable pour cette largeur est de 5 mm.

Aussi, en considérant le sens de l'écoulement, l'interstice 4 comprend une première partie sensiblement rectiligne, en amont de la première gorge, de largeur comprise entre 1 mm et 5mm, et préférentiellement de largeur 1,2 mm.

Cette première partie sensiblement rectiligne débouche sur la gorge externe 7.

La gorge annulaire externe 7 peut avoir un profil rectangulaire, de hauteur comprise entre 1,5 mm et 4 mm, préférentiellement de 3mm, et de profondeur comprise entre 3 mm et 7 mm, préférentiellement de 4,5 mm.

S'ensuit une deuxième partie 4b sensiblement rectiligne, entre la gorge externe 7 et la gorge interne 6, de largeur c comprise entre 0,5 mm et 1 mm, préférentiellement 0,65 mm.

L'interstice 4 comprend une troisième partie 4c sensiblement rectiligne, disposée en aval de la gorge interne 6, et en amont d'une quatrième partie 4d au contact d'éléments mécaniques de l'arbre mobile 2 permettant sa rotation, de largeur comprise entre 0,5 mm et 1 mm, et préférentiellement de largeur 0,65 mm.

La première partie de l'interstice 4 communique directement avec la gorge externe 7. Il s'agit d'une gorge cylindrique faisant le tour complet du corps réchauffeur (géométrie de révolution), non représenté sur les figures.

Le profil de la gorge interne 6 est arrondi.

Le profil de la gorge interne 6 est de diamètre compris entre 2 et 5 mm, et préférentiellement de diamètre 3,2 mm.

Le changement brutal de section entre l'interstice 4 et la gorge externe 7 engendre la formation d'un tourbillon T7 de recirculation à l'intérieur de la gorge externe 7, comme illustré sur la figure 4. Il prend son origine à l'intérieur de la gorge externe 7 directement en dessous du bord d'attaque de l'arbre mobile 2 suivant son axe de rotation et se développe ensuite de part et d'autre de cet élément jusqu'aux trous de purge 5a et 5b. Ce tourbillon T7 permet donc de guider d'éventuelles impuretés qui entreraient par l'amont de l'interstice 4 vers les trous de purge 5a, 5b.

Le profil arrondi (en goutte d'eau) de la gorge interne 6 permet de générer un autre tourbillon T6, contrarotatif par rapport à celui T7 de la gorge externe 7. De même que le tourbillon T7, le tourbillon T6 prend son origine au point le plus amont de la géométrie. Il évolue jusqu'à l'aval de la sonde où l'écoulement, et les impuretés qu'il transporte, sont évacuées.

Certaines impuretés peuvent ne pas être guidées vers un trou de purge 5a, 5b par le tourbillon T7, et continuent alors leur chemin sous l'arbre 2. Elles rencontrent alors la chicane haute ou gorge interne 6 qui est le dernier obstacle qui empêche l'intrusion d'impuretés dans le mécanisme de l'arbre 2 et donc son blocage. Elle doit être la plus haute possible sans pour autant gêner la rotation de l'arbre mobile 2 de la sonde.

Le pied de l'arbre 2 dépasse légèrement du support fixe de sorte qu'un point d'arrêt de l'écoulement se situe sur le pied de sonde. De ce fait l'écoulement entre sous le pied de sonde par la demi-portion amont de l'interstice 4 et ressort par la demi-portion avale de l'interstice et par les trous de purge 5a, 5b.

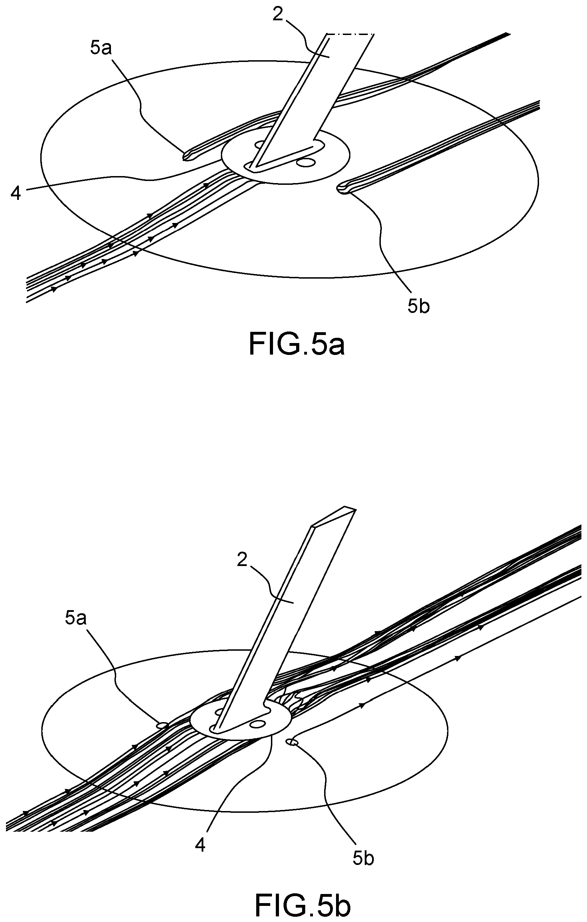

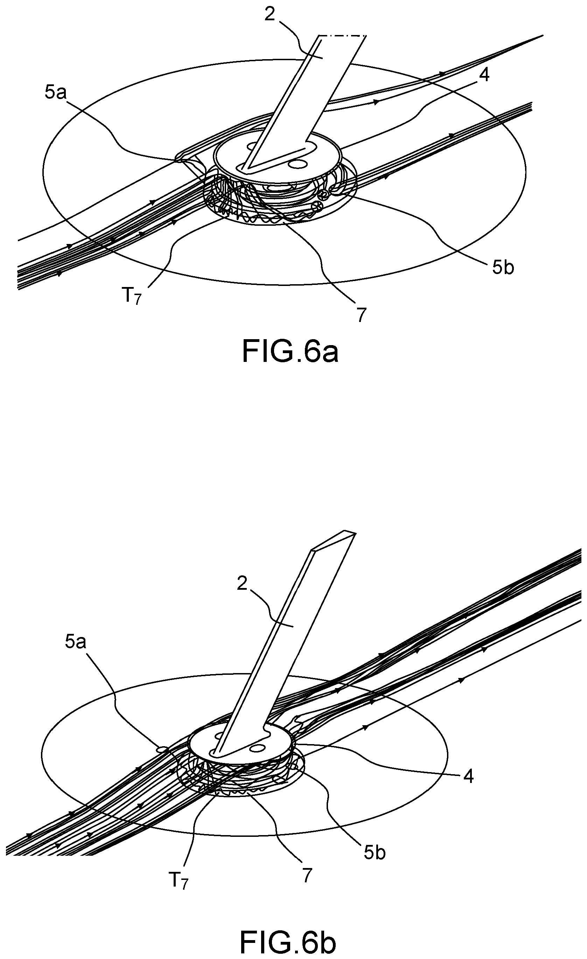

La connexion des trous de purge avec le reste du système d'évacuation des impuretés est représentée sur les figure 5a et figure 5b, ainsi que sur les figure 6a et figure 6b.

La figure 5a montre les lignes de courant de l'écoulement passant par les trous de purge 5a, 5b. Avant d'en sortir, l'écoulement arrive du bas à gauche de la figure 5a et suit le sens des flèches. Il entre par l'amont de l'interstice 4 et circule ensuite dans les gorges 7 et/ou 6 avant de ressortir par le trou de purge 5a et/ou par le trou de purge 5b.

La figure 5b complète la figure 5a, car tout représenter sur une même figure serait illisible. La figure 5b montre les lignes de courant de l'écoulement passant par la partie arrière de l'interstice 4.

La figure 6a montre une vue interne des lignes de courant de l'écoulement d'air passant par les trous de purge du circuit d'évacuation d'impuretés.

La figure 6b complète la figure 6a, car tout représenter sur une même figure serait illisible. La figure 6b montre une vue interne des lignes de courant de l'écoulement d'air passant par la partie arrière de l'interstice 4.

## Revendications

1. Sonde de mesure aérodynamique destinée à mesurer une incidence locale de flux d'air circulant le long du fuselage d'un aéronef, comprenant un support (1) et un arbre mobile (2) en rotation selon un axe longitudinal (3), par rapport au support (1), le support (1) et l'arbre (2) étant configurés pour former entre eux un interstice (4), contournant une languette annulaire (2a) en l'extrémité de l'arbre (2) dans le support (1), permettant de maintenir un jeu fonctionnel pour laisser pivoter librement une extrémité de l'arbre (2) dans le support (1), et communiquant avec un circuit d'évacuation d'impuretés (5), l'interstice (4) comprenant une gorge annulaire interne (6) autour de l'axe de rotation, réalisée dans le support (1), et s'ouvrant en s'écartant de l'axe directement sur la partie extrêmale de la languette annulaire (2a), **caractérisé en ce que** le profil de la gorge interne (6) est arrondi en sorte de favoriser un développement d'un tourbillon (T6) sans favoriser un stockage de sable sous l'extrémité de l'arbre (2).

2. Sonde selon la revendication 1, dans laquelle l'interstice (4) comprend, en outre, une gorge annulaire externe (7), autour de l'axe de rotation (3), réalisée dans le support, et s'ouvrant en se rapprochant de l'axe, de sorte que la languette annulaire (2a) est disposée directement entre les gorges interne (6) et externe (7).

3. Sonde selon la revendication 2, dans laquelle le profil de la gorge externe (7) est rectangulaire.

4. Sonde selon la revendication 3, dans laquelle le profil rectangulaire de la gorge externe est de hauteur (a) comprise entre 1,5 mm et 4 mm.

5. Sonde selon la revendication 4, dans laquelle le profil rectangulaire de la gorge externe est de hauteur (a) 3 mm.

6. Sonde selon la revendication 3 à 5, dans laquelle le profil rectangulaire de la gorge externe (7) est de profondeur (b) comprise entre 3 mm et 7 mm.

7. Sonde selon la revendication 6, dans laquelle le profil rectangulaire de la gorge externe (7) est de profondeur (b) de 4,5 mm.

8. Sonde selon la revendication 7, dans laquelle le profil arrondi de la gorge interne (6) est de diamètre (d) compris entre 2 et 5 mm.

9. Sonde selon la revendication 8, dans laquelle le profil arrondi de la gorge interne (6) est de diamètre (d) de 3,2 mm.

10. Sonde selon l'une des revendications précédentes, dans laquelle, l'interstice (4) comprend une première partie (4a) sensiblement rectiligne, de largeur (f) comprise entre 1 mm et 5mm, entre la partie débouchant à l'air libre de l'interstice (4) et la gorge externe (7).

11. Sonde selon la revendication 10, dans laquelle la première partie de l'interstice est de largeur (f) 1,2 mm.

12. Sonde selon l'une des revendications précédentes, dans laquelle, l'interstice comprend une deuxième partie (4b) sensiblement rectiligne, entre la gorge externe (7) et la gorge interne (6), de largeur (c) comprise entre 0,5 mm et 1 mm.

13. Sonde selon la revendication 12, dans laquelle la deuxième partie (4b) de l'interstice (4), est de largeur (c) 0,65 mm.

14. Sonde selon l'une des revendications précédentes, dans laquelle, l'interstice comprend une troisième partie (4c) sensiblement rectiligne, disposée entre la gorge interne (6) et une quatrième partie (4d) de l'interstice (4) au contact d'éléments mécaniques de l'arbre mobile (2) permettant sa rotation, de largeur (e) comprise entre 0,5 mm et 1 mm.

15. Sonde selon la revendication 14, dans laquelle la troisième partie de l'interstice est de largeur (e) 0,65 mm.

## Patentansprüche

1. Aerodynamische Messsonde, die dazu vorgesehen ist, ein lokales Auftreten eines Luftstroms, der entlang eines Flugzeugrumpfes zirkuliert, zu messen, umfassend eine Halterung (1) und eine in Bezug auf die Halterung entlang einer Längsachse (3) drehbewegliche Welle (2), wobei die Halterung (1) und die Welle (2) konfiguriert sind, um untereinander einen Zwischenraum (4) zu bilden, der eine ringförmige Lasche (2a) am Ende der Welle (2) in der Halterung (1) umgeht, der ermöglicht, ein funktionelles Spiel beizubehalten, um ein Ende der Welle (2) in der Halterung (1) frei schwenken zu lassen, und mit einem Kreislauf zur Abführung von Verunreinigungen (5) kommuniziert, wobei der Zwischenraum (4) eine innere ringförmige Keilrille (6) um die Drehachse herum umfasst, die in der Halterung (1) hergestellt ist, und sich öffnet, indem er direkt an dem endseitigen Teil der ringförmigen Lasche (2a) von der Achse abrückt, **dadurch gekennzeichnet, dass** das Profil der inneren Keilrille (6) derart abgerundet ist, dass eine Entwicklung eines Wirbels (T6) begünstigt wird, ohne eine Anlagerung von Sand unter dem Wellenende (2) zu begünstigen.

2. Sonde nach Anspruch 1, wobei der Zwischenraum (4) weiter eine äußere ringförmige Keilrille (7) um die Drehachse (3) herum umfasst, die in der Halterung hergestellt ist, und sich öffnet, indem er sich der Achse derart annähert, dass die ringförmige Lasche (2a) direkt zwischen der inneren (6) und der äußeren (7) Keilrille angeordnet ist.

3. Sonde nach Anspruch 2, wobei das Profil der äußeren Keilrille (7) rechteckig ist.

4. Sonde nach Anspruch 3, wobei das rechteckige Profil der äußeren Keilrille eine Höhe (a) zwischen 1,5 mm und 4 mm aufweist.

5. Sonde nach Anspruch 4, wobei das rechteckige Profil der äußeren Keilrille eine Höhe (a) von 3 mm aufweist.

6. Sonde nach Anspruch 3 bis 5, wobei das rechteckige Profil der äußeren Keilrille (7) eine Tiefe (b) zwischen 3 mm und 7 mm aufweist.

7. Sonde nach Anspruch 6, wobei das rechteckige Profil der äußeren Keilrille (7) eine Tiefe (b) von 4,5 mm aufweist.

8. Sonde nach Anspruch 7, wobei das abgerundete Profil der inneren Keilrille (6) einen Durchmesser (d) zwischen 2 und 5 mm aufweist.

9. Sonde nach Anspruch 8, wobei das abgerundete Profil der inneren Keilrille (6) einen Durchmesser (d) von 3,2 mm aufweist.

10. Sonde nach einem der vorstehenden Ansprüche, wobei der Zwischenraum (4) einen im Wesentlichen geradlinigen ersten Teil (4a), der eine Breite (f) zwischen 1 mm und 5 mm aufweist, zwischen dem Teil, der zur Außenluft des Zwischenraums (4) führt, und der äußeren Keilrille (7) umfasst.

11. Sonde nach Anspruch 10, wobei der erste Teil des Zwischenraums eine Breite (f) von 1,2 mm aufweist.

12. Sonde nach einem der vorstehenden Ansprüche, wobei der Zwischenraum einen im Wesentlichen geradlinigen zweiten Teil (4b) zwischen der äußeren Keilrille (7) und der inneren Keilrille (6) umfasst, der eine Breite (c) zwischen 0,5 mm und 1 mm aufweist.

13. Sonde nach Anspruch 12, wobei der zweite Teil (4b) des Zwischenraums (4) eine Breite (c) von 0,65 mm aufweist.

14. Sonde nach einem der vorstehenden Ansprüche, wobei der Zwischenraum einen im Wesentlichen geradlinigen dritten Teil (4c) umfasst, der zwischen der inneren Keilrille (6) und einem vierten Teil (4d) des Zwischenraums (4) im Kontakt mit mechanischen Bauteilen der beweglichen Welle (2) angeordnet ist, die ihre Drehung ermöglichen, der eine Breite (e) zwischen 0,5 mm und 1 mm aufweist.

15. Sonde nach Anspruch 14, wobei der dritte Teil des Zwischenraums eine Breite (e) von 0,65 mm aufweist.

## Claims

1. An aerodynamic measurement probe intended to measure a local angle of attack of an air stream flowing along the fuselage of an aircraft, comprising a support (1) and a movable shaft (2) that is able to rotate about a longitudinal axis (3) with respect to the support (1), the support (1) and the shaft (2) being configured to form between them a gap (4), passing around an annular tab (2a) at the end of the shaft (2) in the support (1), making it possible to maintain a functional clearance to allow one end of the shaft (2) to pivot freely in the support (1), and communicating with an impurity discharge circuit (5), the gap (4) comprising an inner annular groove (6) about the axis of rotation, made in the support (1), and opening out away from the axis directly onto the end part of the annular tab (2a), **characterised in that** the profile of the inner groove (6) is rounded so as to promote development of a vortex (T6) without promoting storage of sand under the end of the shaft (2).

2. The probe as claimed in claim 1, wherein the gap (4) further comprises an outer annular groove (7), about the axis of rotation (3), made in the support, and opening out toward the axis, so that the annular tab (2a) is positioned directly between the inner (6) and outer (7) grooves.

3. The probe as claimed in claim 2, wherein the profile of the outer groove (7) is rectangular.

4. The probe as claimed in claim 3, wherein the rectangular profile of the outer groove has a height (a) of between 1.5 mm and 4 mm.

5. The probe as claimed in claim 4, wherein the rectangular profile of the outer groove has a height (a) of 3 mm.

6. The probe as claimed in claims 3 to 5, wherein the rectangular profile of the outer groove (7) has a depth (b) of between 3 mm and 7 mm.

7. The probe as claimed in claim 6, wherein the rectangular profile of the outer groove (7) has a depth (b) of 4.5 mm.

8. The probe as claimed in claim 7, wherein the rounded profile of the inner groove (6) has a diameter (d) of between 2 and 5 mm.

9. The probe as claimed in claim 8, wherein the rounded profile of the inner groove (6) has a diameter (d) of 3.2 mm.

10. The probe as claimed in one of the preceding claims, wherein the gap (4) comprises a substantially straight first part (4a), having a width (f) of between 1 mm and 5 mm, between the part of the gap (4) emerging into the open air and the outer groove (7).

11. The probe as claimed in claim 10, wherein the first part of the gap has a width (f) of 1.2 mm.

12. The probe as claimed in one of the preceding claims, wherein the gap comprises a substantially straight second part (4b), between the outer groove (7) and the inner groove (6), having a width (c) of between 0.5 mm and 1 mm.

13. The probe as claimed in claim 12, wherein the second part (4b) of the gap (4) has a width (c) of 0.65 mm.

14. The probe as claimed in one of the preceding claims, wherein the gap comprises a substantially straight third part (4c), positioned between the inner groove (6) and a fourth part (4d) of the gap (4) in contact with mechanical elements of the movable shaft (2) allowing the rotation thereof, having a width (e) of between 0.5 mm and 1 mm.

15. The probe as claimed in claim 14, wherein the third part of the gap has a width (e) of 0.65 mm.
